# EUROPÄISCHE PATENTANMELDUNG

(11) **EP 1 175 820 A2**
(43) Veröffentlichungstag der Anmeldung: **30.01.2002**
(21) Anmeldenummer: 01117069.3
(22) Anmeldetag: 13.07.2001
(51) Int. Cl.: A01B 73/04

(54) **Verfahren und Vorrichtungen zum Schwenken von Tragarmen für die Arbeitswerkzeuge mehrteiliger landwirtschaftlicher Arbeitsmaschinen**

(30) Priorität: 26.07.2000 DE 10036631
(71) Anmelder: CLAAS SAULGAU GMBH, 88348 Saulgau (DE)
(72) Erfinder: Rauch, Hans, 88348 Bad Saulgau (DE)

(57) **Zusammenfassung**

Die Erfindung betrifft ein Verfahren und dafür geeignete Vorrichtungen, die äußerst kompakte Nichtarbeitsstellungen von mehrteiligen landwirtschaftlichen Maschinen (1) mit sehr großen Arbeitsbreiten ermöglichen. Das Verfahren zum Schwenken der Tragarme einer landwirtschaftlichen Arbeitsmaschine (1) mit wenigstens zwei an einem Trägerhauptgestell (2) angeordneten Tragarmen (3, 4), lässt die Tragarme (3, 4) auf ein Eingangssignal hin selbsttätig mit einem zeitlichen Abstand von wenigstens einer Arbeitsstellung in wenigtens eine Nichtarbeitsstellung und umgekehrt schwenken. Die Vorrichtungen zur Durchführung des Verfahrens weisen an jedem Tragarm (3, 4) der landwirtschaftlichen Maschine (1) wenigstens ein Stellmittel (7, 8) mit mindestens einem eigenen Leitungssystem (25, 30, 43, 44, 52) auf, dem wenigstens ein Volumensteuerer (21, 45, 46) zugeordnet ist.

## Beschreibung

Die Erfindung betrifft ein Verfahren gemäß dem Oberbegriff des Anspruches 1 und Vorrichtungen zur Durchführung dieses Verfahrens gemäß den Ansprüchen 6 und/oder 14 und/oder 15.

Verfahren und Vorrichtungen der genannten Gattung sind bekannt. Sie dienen zum Zusammenfalten der Tragarme für die Arbeitswerkzeuge landwirtschaftlicher Arbeitsmaschinen in eine möglichst kompakte Nichtarbeitsstellung und zum Auseinanderfalten der Tragarme zum Erreichen einer insgesamt möglichst großen Arbeitsbreite der landwirtschaftlichen Maschine.

In der EP 0 044 569 wird ein zusammen- oder auffaltbares Gerät oder ein Werkzeugträger insbesondere für landwirtschaftliche Maschinen beschrieben, das auch bei sehr großer Arbeitsbreite eine verhältnismäßig kompakte und stabile Transporteinheit ermöglichen soll. Der hydraulische Speise- und Steuerkreis für den Schwenkmechanismus weist eine betätigbare Steuereinrichtung auf, mittels der die Schwenkgeschwindigkeiten der beiden Trägerausleger für einen bestimmten Abschnitt des Schwenkweges aus der Arbeitsstellung in die Transportstellung unterschiedlich einstellbar sind. Die Schwenkzylinder werden so gesteuert, dass sie die Ausleger automatisch in definierter zeitlicher Reihenfolge aus der Arbeitsstellung in die Transportstellung schwenken, so dass die Ausleger bzw. ihre Arbeitswerkzeuge selbst bei gegenüber dem Trägerhauptabschnitt größerer Gesamtbreite nicht kollidieren und so in die möglichst kompakte und damit stabile Transportstellung eingeschwenkt werden können, wobei einer der Ausleger auch in die als optimal beschriebene Transportstellung von 180° eingeschwenkt werden kann. Beide Trägerausleger klappen mit annähernd gleicher Schwenkgeschwindigkeit auseinander. Als besonders vorteilhafte Transportstellung wird eine Transportstellung angestrebt, bei der die Tragarme um 180° geschwenkt werden. Mit der offenbarten Lösung kann die um 180° geschwenkte Transportstellung allerdings nur für einen der Tragarme erreicht werden, der andere muss, da die Schwenkgeschwindigkeiten der beiden Tragarme beim Ausklappen gleich sind, in einem deutlich kleineren Winkel in der Transportstellung arretiert werden, da die Träger und/oder ihre Werkzeuge sonst beim Auseinanderklappen kollidieren würden. Das heißt, derartige Maschinen müssen auf Grund der nahezu gleichen Ausschwenkgeschwindigkeit der Tragarme entweder in der Länge ihrer Tragarme und somit in der Arbeitsbreite stark begrenzt werden und/oder der später einklappende Arm kann nicht in eine kompakte Nichtarbeitsstellung gebracht werden.

Die Aufgabe der Erfindung wird darin gesehen, ein Verfahren und dafür geeignete Vorrichtungen zu entwickeln, wodurch eine möglichst kompakte Nichtarbeitsstellung einer mehrteiligen landwirtschaftlichen Maschine bei einer sehr großen Arbeitsbreite erreicht wird, wobei sich die Tragarme für die Arbeitswerkzeuge in der Transportstellung zumindest teilweise überlappen können. Das erfindungsgemäße Verfahren und die dafür vorgesehenen Vorrichtungen sollen einfach, kostengünstig, kompakt und mit wenigen robusten Bauteilen umzusetzen sein.

Erfindungsgemäß wird die Aufgabe durch ein Verfahren mit den kennzeichnenden Merkmalen des Anspruches 1 und Vorrichtungen zur Durchführung dieses Verfahrens mit den kennzeichnenden Merkmalen des Anspruches 6 und/oder 14 und/oder 15 gelöst.

Ein besonders vorteilhaftes Verfahren zum Schwenken der Tragarme einer landwirtschaftlichen Arbeitsmaschine lässt die Tragarme auf ein Eingangssignal hin selbsttätig mit einem zeitlichen Abstand von wenigstens einer Arbeitsstellung in wenigstens eine Nichtarbeitsstellung und umgekehrt klappen. Dadurch kann eine sehr kompakte Nichtarbeitsstellung der mehrteiligen landwirtschaftlichen Arbeitsmaschine verwirklicht werden. Da insbesondere die Höhen- und Breitenbeschränkungen für den Straßentransport vielfach das limitierende Element für die Arbeitsbreite der Maschinen sind, ist es mit den erfindungsgemäßen Maschinen möglich, größere Arbeitsbreiten und somit größere Flächenleistungen zu erzielen.

In einer sehr vorteilhaften Ausführung des erfindungsgemäßen Verfahrens klappen die Tragarme in einer bestimmten zeitlichen Reihenfolge selbsttätig zusammen und in umgekehrter Reihenfolge wieder selbsttätig auseinander. Dadurch wird eine Kollision der Träger und/oder ihre Arbeitswerkzeuge sowohl beim Einklappen als auch beim Auseinanderklappen vermieden.

In besonders vorteilhafte Ausgestaltungen des Verfahrens, wird wenigstens ein Tragarm beim Zusammenklappen zumindest auf einem Teil des Schwenkweges gebremst einschwenkt, um einen zeitlichen Abstand beim Zusammenklappen der Tragarme verwirklichen zu können, und somit eine zumindest teilweise Überlappung der Tragarme zuzulassen, so dass die Nichtarbeitsstellung der erfindungsgemäßen Maschinen sehr kompakt sein kann.

In weiteren sehr vorteilhaften Ausführungsformen des Verfahrens, wird mindestens ein Tragarm beim Auseinanderklappen zumindest auf einem Teil des Schwenkweges gebremst ausgeklappt, so dass auch beim Auseinanderklappen ein zeitlicher Abstand zwischen dem Ausklappen der einzelnen Tragarme existiert. Erst durch das gebremste Ausklappen mindestens eines Tragarmes in Verbindung mit dem gebremsten Einklappen mindestens eines Tragarmes kann eine besonders kompakte Nichtarbeitsstellung auch bei einer insgesamt sehr großen Tragarmlänge und einem entsprechend großen Überlappungsbereich der Tragarme erzielt werden.

Ein weiterer Vorteil der erfindungsgemäßen Maschinen ist, dass die Tragarme in verschiedenen Arbeits- und Nichtarbeitsstellungen festlegbar sind. Durch die unterschiedlichen Festlegungen der Tragarme in verschiedene Arbeitsstellungen ist es möglich, in Hanglagen, bei Bodenunebenheiten und im Bereich von Hindernissen mit angewinkelten Tragarmen zu arbeiten. Die verschiedenen festlegbaren Nichtarbeitsstellungen der Tragarme erleichtern die Wartungs-, Kontroll- und Reparaturarbeiten sowie den Austausch der Arbeitswerkzeuge erheblich.

In einer sehr kostengünstigen, robusten Ausführungsform existiert zu jedem Tragarm wenigstens ein Stellmittel mit zumindest einem eigenen Leitungssystem mit wenigstens einem Sperrventil, wobei mindestens einem der Stellmittel ein Volumenstrombegrenzer zugeordnet ist, und das Sperrventil des einen Stellmittels gegenläufig zu dem Sperrventil des anderen Stellmittels angeordnet ist. Diese erfindungsgemäße Ausführungsform ist durch die Verwendung von mechanischen Bauteilen den hohen Anforderungen an die Robustheit landwirtschaftlicher Maschinen in besonderem Maße gewachsen. Diese Bauteile sind zudem sehr einfach, kostengünstig und wartungsarm in der Handhabung.

Besonders vorteilhafte Ausführungsformen der Stellmittel sind Hubzylinder mit an den Kolbenflächen befindlichen Fortsätzen und als topfförmigen Vertiefungen ausgeführten Hubzylinderböden, wobei die Fortsätze und die topfförmigen Vertiefungen zusammenarbeiten. Solche Hubzylinder sind besonders einfache, kompakte, robuste und kostengünstige Mittel zur Umsetzung des zeitversetzten Aus- und Einklappens der Tragarme.

Der Volumenstrombegrenzer, der aus mindestens einem Fortsatz der Kolbenfläche, wenigstens einer topfförmige Vertiefung am Hubzylinderboden und mindestens einem Rücklauf für ein energieübertragendes Medium besteht, ist eine besonders einfache, kostengünstige, kompakte und robuste Konstruktion, die durch diese Eigenschaften eine besonders geeignete Komponente der Aufgabenlösung für das zeitversetzte Einklappen der Tragarme darstellt.

Eine außergewöhnlich einfache Ausführungsform für einen Rücklauf für das energieübertragende Medium ist eine Leckölleitung. Der Rücklauf für das energieübertragende Medium kann aber auch aus mindestens einer Drosseleinrichtung bestehen. In solch einem Fall kann die Drosseleinrichtung auch ein einstellbares Drosselventil sein. Eine solche Ausführungsform bietet zusätzlich zu den angestrebten Eigenschaften, wie Einfachheit, Kompaktheit, Robustheit und einem verhältnismäßig niedrigen Preis des Bauteils, auch noch die Möglichkeit der Feinregulierung der Vorrichtung zum zeitversetzten Zusammen- und Auseinanderklappen durch den Benutzer.

Um eine besonders kompakte und unempfindliche Konstruktion zu erhalten, können die Rückschlagventile und gegebenenfalls die Drosseleinrichtung auch in die Hubzylinderböden integriert werden.

Weitere bevorzugte Ausführungsformen weisen, wie die zuvor beschriebenen einen hydraulischen Speisekreislauf auf - sie werden aber elektronisch und nicht hydraulisch gesteuert. Daher können die Kolben einfacher, kostengünstiger und kompakter, nämlich ohne Fortsätze und topfförmige Vertiefungen ausgeführt sein. Existiert zu jedem Tragarm wenigstens ein Stellmittel, und sind die Stellmittel über ein Leitungssystem miteinander gekoppelt, wobei jedem Stellmittel wenigstens ein weiteres zumindest einen Volumenstromsteuerer aufnehmendes Leitungssystem zugeordnet ist, so macht die Steuerung mittels der Volumenstromsteuerer es möglich, dass die Stellmittel die Tragarme mit einer zeitliche Verzögerung ihre unterschiedlichen erwünschten Positionen erreichen können.

In einer weiteren besonders vorteilhaften erfindungsgemäßen Vorrichtung ist jedem Tragarm wenigstens ein Stellmittel zugeordnet. Die Stellmittel sind über ein Leitungssystem miteinander gekoppelt und jedem Stellmittel ist wenigstens ein weiteres Leitungssystem zugeordnet, wobei die weiteren Leitungssysteme unterschiedlichen Querschnitt aufweisen, und dem Leitungssystem mit dem größeren Querschnitt ist wenigstens ein Volumenstromsteuerer zugeordnet. Diese Vorrichtung ist noch einfacher und kostengünstiger als die zuvor beschriebene, da durch den größeren Querschnitt des einen Leitungssystems auf weitere Volumenstromsteuerer in dem Leitungssytem mit dem geringeren Querschnitt verzichtet werden kann.

Die Volumenstromsteuerung erfolgt in besonders vorteilhafter Weise mittels mindestens eines einstellbaren Drosselventils. Eine besonders einfache Handhabung wird erreicht, wenn die Volumenstromsteuerer der Stellmittel über ein Steuergerät selbsttätig angesteuert werden können.

Eine besonders vorteilhafte Ausführungsform beinhaltet wenigstens ein Steuergerät, das in Abhängigkeit von den durch einen Lagesensor generierten Signalen Stellsignale auf die Volumenstromsteuerer überträgt, wobei die Generierung der Signale des Lagesensors in Abhängigkeit von der momentanen Stellung wenigstens eines der Tragarme erfolgt. Dadurch kann die zeitliche Verzögerung beim Zusammen- und Auseinanderklappen in einer besonders einfachen und präzisen Weise erreicht werden. Die Einstellungen können besser an veränderte Bedingungen - wie den Einsatz anderer Arbeitswerkzeuge angepasst werden - als das bei der Ausführungsform mit einem hydraulischen Speise- und Steuerkreislauf und lediglich einer Leckölleitung als Rücklauf für das energieübertragende Medium der Fall ist. In einer sehr einfachen und kostengünstigen Variante wird als Lagesensor ein induktiver Sensor gewählt.

Weitere vorteilhafte Ausgestaltungen sind Gegenstand der Unteransprüche und werden nachfolgend anhand von Zeichnungen näher erläutert.

Es zeigen
- Figur 1: ein erstes Ausführungsbeispiel der erfindungsgemäßen landwirtschaftlichen Maschine in der Vorderansicht in einer Nichtarbeitsstellung (gestrichelte Linien) und in einer Arbeitsstellung (durchgezogene Linien)
- Figur 2: Detailansicht einer erfindungsgemäßen Schwenksteuerung mit Drosseleinrichtung
- Figur 3: Detailansicht einer weiteren erfindungsgemäßen Schwenksteuerung mit Leckölleitung
- Figur 4: Detailansicht einer erfindungsgemäßen Schwenksteuerung mit Lagesensor, Steuereinheit und Drosseleinrichtungen
- Figur 5: Detailansicht einer erfindungsgemäßen Schwenksteuerung mit Lagesensor, Steuereinheit und Durchflusssteuereinrichtung

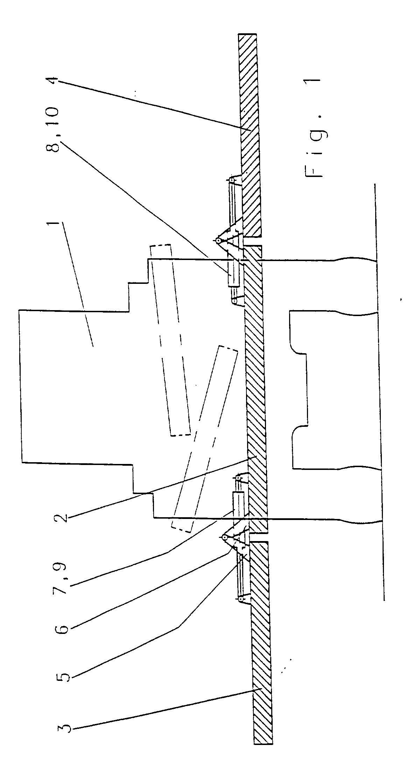

Das erfindungsgemäße Verfahren und zur Durchführung des Verfahrens mögliche Vorrichtungen werden an Hand einer landwirtschaftlichen Arbeitsmaschine 1 mit einem Trägerhauptgestell 2 und über Koppelglieder 5, 6 daran schwenkbar befestigten Tragarmen 3 und 4 beschrieben (Figur 1). Die Tragarme 3 und 4 sind von einer seitlich ausladenden Arbeitsstellung zum Transport in eine zumindest teilweise über dem Trägerhauptgestell 2 liegende Nichtarbeitsposition verschwenkbar. Zur Realisierung dieser Schwenkbewegungen sind den durch die Koppelglieder 5, 6 mit dem Trägerhauptgestell 2 verbundenen Tragarmen 3, 4 als Hubzylinder 9, 10 ausgeführte Stellmittel 7, 8 zugeordnet, wobei zwischen dem Tragarm 3 und dem Trägerhauptgestell 2 der Hubzylinder 9 und zwischen dem Tragarm 4 und dem Trägerhauptgestell 2 der Hubzylinder 10 zwischengeschaltet ist.

In einer ersten Ausführungsform gemäß den Figuren 1 bis 3 sind die Hubzylinder 9, 10 als doppeltwirkende Hubzylinder 9, 10 ausgebildet, wobei jedem Kolben 11, 12 einenends die Kobenstange 13, 14 und anderenends ein Fortsatz 15, 16 angeformt ist. Dem jeweiligen Fortsatz 15, 16 gegenüberliegend ist in jeden Hubzylinderboden 17, 18 eine topfförmige Vertiefung 19, 20 in der Weise eingearbeitet, dass jeder Fortsatz 15, 16 in der Lage ist, in die jeweilige topfförmige Vertiefung 19, 20 einzutauchen.

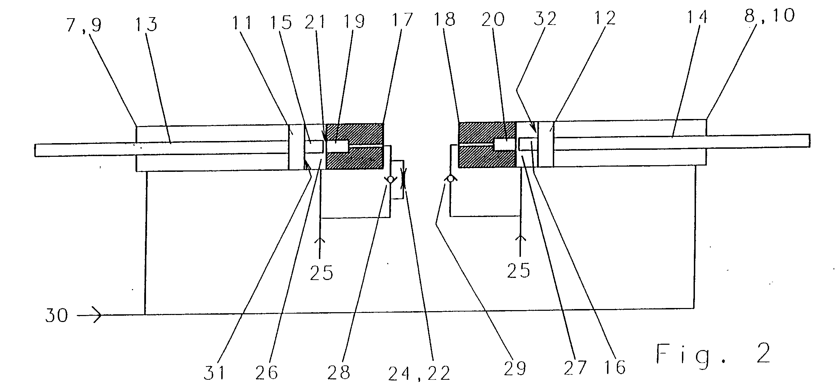

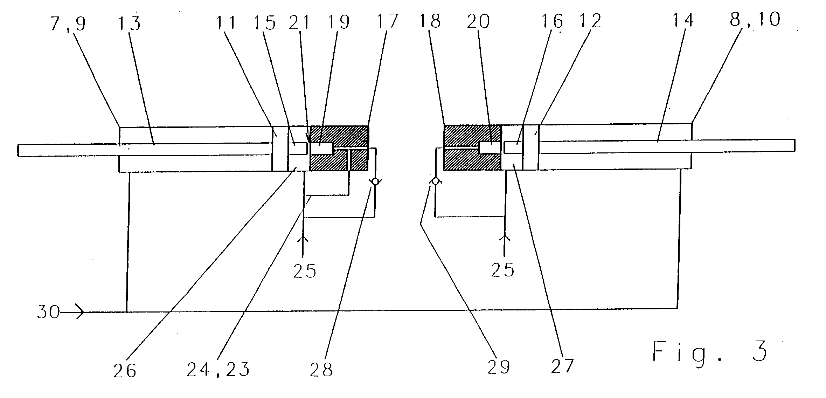

Erfindungsgemäß besitzt der Hubzylinder 9 einen Volumenstrombegrenzer 21, der sich aus dem kolbenflächenseitigen Fortsatz 15, der topfförmigen Vertiefung 19 und einem als Drosseleinrichtung 22 oder Ölrückführung 23 ausgeführten Rücklauf 24 zusammensetzt (Figuren 2 und 3). Über ein Leitungssystem 25 sind die topfförmigen Vertiefungen 19, 20 der Hubzylinderböden 17, 18 jedes Hubzylinders 9, 10 mit der fortsatzseitigen Druckkammer 26, 27 des jeweiligen Hubzylinders 9, 10 verbunden. In jedes dieser Leitungssysteme 25 ist ein Rückschlagventil 28, 29 integriert, wobei die Rückschlagventile 28, 29 in ihrer Durchlassrichtung in der Weise zueinander entgegengesetzt orientiert sind, dass das Rückschlagventil 28 das Abfließen des energieübertragenden Mediums aus der töpfförmigen Vertiefung 19 des Hubzylinders 9 und das Rückschlagventil 29 das Hineinfließen des energieübertragenden Mediums in die topfförmige Vertiefung 20 des Hubzylinders 10 sperrt. Kolbenstangenseitig sind die Hubzylinder 9, 10 über ein gemeinsames Leitungssystem 30 miteinander verbunden.

Zum Verschwenken der Tragarme 3 und 4 in die wenigstens eine Nichtarbeitsposition wird das Leitungssystem 30 druckbeaufschlagt. Hierauf bewegen sich die Kolben 11 und 12 ungebremst in Richtung der topfförmigen Vertiefungen 19, 20. Bis zu dem Zeitpunkt, an dem die Fortsätze 15 und 16 der Kolben 11 und 12 in den Bereich der topfförmigen Vertiefungen 19 und 20 treten, klappen die Tragarme 3, 4 mit nahezu gleicher Geschwindigkeit ein. Sobald der Fortsatz 15 des Kolbens 11 des Hubzylinders 9 in den Bereich der topfförmigen Vertiefung 19 tritt, kann die Kolbenstange 13 des Hubzylinders 9 nur noch sehr langsam einfahren, da das aus der Vertiefung 19 zu verdrängende energieübertragende Medium nur über den als Drosseleinrichtung 22 oder als Ölrückführung 23 ausgeführten Rücklauf 24 abfließen kann. Währenddessen kann der andere Hubzylinder 10 ungebremst weiter einfahren, so dass der zugehörige Tragarm 4 zuerst in der für ihn vorgesehenen Nichtarbeitsstellung ankommt. Die Reduzierung der Abflussgeschwindigkeit durch die Drosseleinrichtung 22 bzw. die Ölrückführung 23 führt zu einer zeitlichen Verzögerung der Schwenkbewegung des Tragarms 3 in der Endphase der Schwenkbewegung, die bewirkt, dass der Tragarm 3 seine Nichtarbeitsstellung später erreicht als der Tragarm 4.

Beim Rückschwenken der Tragarme 3, 4 von der wenigstens einen Nichtarbeitsposition in die Arbeitsposition wird das Leitungssystem 25 druckbeaufschlagt. Die Anordnung der Kolben 11, 12 mit ihren Fortsätzen 15, 16 und der topfförmigen Vertiefungen 19, 20 der jeweiligen Hubzylinder 9, 10 sowie die gegenläufige Orientierung der Rückschlagventile 28, 29 führt dazu, dass anfangs nur die fortsatzseitige Ringoberfläche 31 des Kolbens 11, die Oberfläche des am Kolben 11 angeformten Fortsatzes 15 und die Ringoberfläche 32 des Kolbens 12 druckbeaufschlagt werden. Die Oberfläche des an den Kolben 12 angeformten Fortsatzes 16 ist durch die Druckbeaufschlagung der Leitung 25 zunächst nicht betroffen, da das Rückschlagventil 29 dies nicht zulässt. Dadurch fährt die Kolbenstange 13 des Hubzylinders 9 solange deutlich schneller aus als die Kolbenstange 14 des Hubzylinders 10, solange sich der Fortsatz 16 innerhalb der topfförmigen Vertiefung 20 bewegt. Der oben liegende Tragarm 3 fährt anfangs dem entsprechend deutlich schneller aus als der darunter liegende Tragarm 4. Nach dem Verlassen der topfförmigen Vertiefung 20 kann auch die Kolbenstange 14 des Hubzylinders 10 mit einer nahezu gleichen Geschwindigkeit wie die Kolbenstange 13 des Hubzylinders 9 weiter ausfahren. Dieses Ausführungsbeispiel soll der Erläuterung des erfindungsgemäßen Verfahrens und der dieses Verfahren realisierenden Vorrichtung dienen. Das Verfahren und die Vorrichtungen eignen sich für alle mehrteiligen Rahmen von landwirtschaftlichen Arbeitsmaschinen, deren verschwenkbaren Rahmenteile von wenigstens einer Arbeitsstellung in zumindest eine Nichtarbeitsstellung und umgekehrt bewegbar sein müssen.

Es liegt im Rahmen der Erfindung, dass abweichend von dem dargestellten Ausführungsbeispiel die topfförmige Vertiefung (19, 20) in den Kolben (11, 12) eingelassen sein kann und der Fortsatz (15, 16) am Hubzylinderboden (17, 18) angearbeitet ist.

Es liegt im Rahmen der Erfindung, dass das erfindungsgemäße Verfahren auch mittels einer elektronisch gesteuerten Vorrichtung 33, 34 durchgeführt werden kann (Figuren 1, 4 und 5).

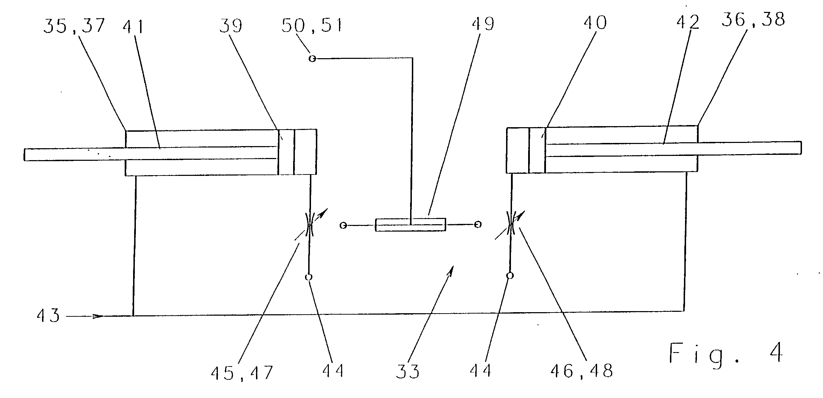

Die Detailansicht der erfindungsgemäß elektronisch gesteuerten Vorrichtung 33 (Figur 4) zeigt zwei als Hubzylinder 35, 36 ausgeführte Stellmittel 37, 38 mit ihren Kolben 39, 40 und den zugehörigen Kolbenstangen 41, 42. Über Leitungssystem 43 können die Hubzylinder 35, 36 kolbenstangenseitig druckbeaufschlagt werden. Die Druckbeaufschlagung des Leitungssystems 44 wirkt kolbenflächenseitig auf die Kolben 39, 40. Das Leitungssystem 44 nimmt einen dem Hubzylinder 35 vorgeschalteten Volumenstromsteuerer 45 und einen dem Hubzylinder 36 vorgeschalteten Volumenstromsteuerer 46 auf, wobei die beiden Volumenstromsteuerer 45, 46 im einfachsten Fall als einstellbare Drosselventile 47, 48 ausgeführt sind. Die beiden Volumenstromsteuerer 45, 46 werden von mindestens einer Steuereinheit 49 angesteuert, wobei die Steuereinheit 49 ihre elektronischen Signale von wenigstens einem Lagesensor 50 in Abhängigkeit von der momentanen Stellung der Tragarme 3, 4 erhält.

Dabei wird zunächst beim Verschwenken der Tragarme 3, 4 von der Arbeits- in eine Nichtarbeitsstellung das Leitungssystem 43 druckbeaufschlagt, so dass die Kolbenstangen 41, 42 in die jeweiligen Hubzylinder 35, 36 mit annähernd gleicher Geschwindigkeit einfahren. Der im einfachsten Fall als induktiver Sensor 51 ausgeführte Lagesensor 50 ist so an der landwirtschaftlichen Arbeitsmaschine 1 angeordnet, dass wenigstens einer der Tragarme 3, 4 an diesem Lagesensor 50 vorbeibewegt wird, wobei aufgrund des Vorbeibewegens durch den Lagesensor 50 ein Signal generiert und an die Steuereinheit 49 übertragen wird. Die Steuereinheit 49 wiederum generiert ein Stellsignal, durch welches eine der Drosseleinrichtungen 47, 48 eine Querschnittsverringerung erfährt, so dass das Einfahren der Kolbenstange 41, 42 des der querschnittsreduzierten Drosseleinrichtung 47, 48 vorgeschalteten Hubzylinders 35, 36 und damit die Schwenkbewegung des entsprechenden Tragarms 3, 4 gebremst wird. Nach Erreichen der Transportstellung wird die Querschnittsreduzierung der Drosselventile 47, 48 mittels der Steuereinheit 49 getauscht, so dass nun das zuvor unverstellt gebliebene Drosselventil 47, 48 eine Querschnittsverringerung erfährt und das zuvor verstellte Drosselventil 47, 48 zurückgesetzt wird. Das Ausklappen von der Nichtarbeitstsellung in die Arbeitsstellung erfolgt nun, indem das Leitungssystem 44 druckbeaufschlagt wird. Dabei wird über das querschnittsverringerte Drosselventil 47, 48 dem damit verbundenen Hubzylinder 35, 36 ein geringerer Volumenstrom des energieübertragenden Mediums zugeführt, so dass der mit diesem Hubzylinder 35, 36 gekoppelte Tragarm 3, 4 mit niedrigerer Geschwindigkeit verschwenkt wird. Beim Herabschwenken wird wiederum einer der Tragarme 3, 4 am Lagesensor 50 vorbeibewegt, wobei der Lagesensor 50 ein Signal generiert, welches über die Steuereinheit 49 eine Rücksetzung der Querschnittsverringerung des Drosselventils 47, 48 bewirkt, so dass ab diesem Zeitpunkt beide Tragarme mit gleicher Geschwindigkeit in die Arbeitsstellung bewegt werden. Auf diese Weise klappt der weiter oben liegende Tragarm 3, 4 zunächst schneller aus als der darunter liegende Tragarm 3, 4, so dass auch beim Verschwenken der Tragarme 3, 4 in die Arbeitsstellung eine Kollision zwischen beiden sicher vermieden wird.

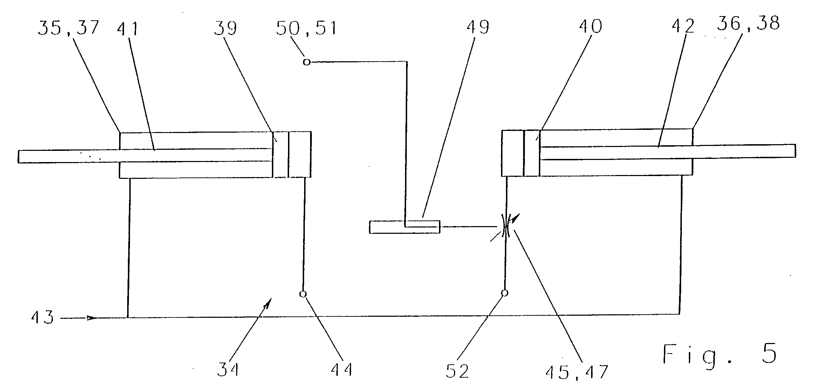

Eine weitere erfindungsgemäße Steuerung 34 (Figur 5) besteht aus zwei als Hubzylinder 35, 36 ausgeführten Stellmitteln 37, 38 mit ihren Kolben 39, 40 und den zugehörigen Kolbenstangen 41, 42. Kolbenstangenseitig sind die Hubzylinder 35, 36 über Leitungssystem 43 miteinander verbunden. Kolbenflächenseitig ist der Hubzylinder 35 mit Leitungssystem 44 und der Hubzylinder 36 mit Leitungssystem 52 verbunden, wobei der Querschnitt des Leitungssystems 52 größer als der Querschnitt des Leitungssystems 44 ist.

Über das Leitungssystem 43 können die Hubzylinder 35, 36 kolbenstangenseitig druckbeaufschlagt werden. Die Druckbeaufschlagung der Leitungssysteme 44, 52 wirkt kolbenflächenseitig auf die Kolben 39, 40, wobei dem Leitungssystem 52 zudem ein Volumenstromsteuerer 45 zugeordnet ist. Dieser Volumenstromsteuerer 45 wird wiederum von einem Drosselventil 47 gebildet, wobei der Querschnitt des Drosselventils 47 kleiner, gleich oder größer dem Querschnitt der Leitungssysteme 43, 44 eingestellt werden kann. Der Volumenstromsteuerer 45 wird wiederum von einer Steuereinrichtung 49 angesteuert, die ihrerseits mit dem im einfachsten Fall als induktiver Sensor 51 ausgeführten Lagesensor 50 verbunden ist. Abweichend von der Vorrichtung 33 nach Figur 3 wird in der Ausführungsform nach Figur 4 nur der Zu- und Ablauf des Leitungssystems 52 des Hubzylinders 36 gesteuert. Wird nun zum Verschwenken der Tragarme 3, 4 von der Arbeitsstellung in eine Nichtarbeitsstellung Leitungssystem 43 druckbeaufschlagt, bewegen sich die Kolbenstangen 41, 42 in die Hubzylinder 36, 36 hinein, wobei die mit den Kolbenstangen 41, 42 verbundenen Tragarme 3, 4 mit annähernd gleicher Geschwindigkeit nach oben schwenken. Bewegt sich einer der Tragarme 3, 4 an dem Lagesensor 50 vorbei, generiert dieser ein Signal, welches über die Steuereinheit 49 eine Querschnittsverringerung am Drosselventil 47 hervorruft, so dass die weitere Schwenkbewegung des mit dem Hubzylinder 36 verbundenen Tragarms 4 bis zum Erreichen der Nichtarbeitsposition gebremst wird. Nach erreichter Nichtarbeitsposition wird der Querschnitt des Drosselventils 47 durch Steuereinrichtung 49 so verändert, dass er größer als der Querschnitt des Leitungssystems 44 und im einfachsten Fall gleich dem des Leitungssystems 52 ist. Werden nun die Leitungssysteme 44, 52 druckbeaufschlagt, bewegen sie die Kolbenstangen 41, 42 aus den Hubzylindern 35, 36 heraus, wobei sich die Tragarme 3, 4 wieder von der Nichtarbeitsposition in die Arbeitsposition verschwenken. Aufgrund des größeren Querschnitts von Leitungssystem 52 und Drosselventil 47 wird dem Hubzylinder 36 in gleicher Zeit die größere Menge des energieübertragenden Mediums zugeführt, so dass der Tragarm 4 zu Bewegungsbeginn mit der höheren Geschwindigkeit herabschwenkt. Im dem Moment, wo einer der Tragarme 3, 4 wieder den Lagesensor 50 passiert, generiert dieser ein weiteres Signal, welches an die Steuereinheit 49 weitergeleitet wird. Die Steuereinrichtung wiederum generiert ein Stellsignal, welches zu einer Verringerung des Querschnitts des Drosselventils 47 führt, wobei im einfachsten Fall der Durchlassquerschnitt des Drosselventils 47 dem Querschnitt des Leitungssystems 44 entspricht, so dass sich ab diesem Verstellvorgang beide Tragarme 3, 4 mit gleicher Geschwindigkeit weiter bis zum Erreichen der Arbeitsposition bewegen. Am Ende der Bewegung der Tragarme 3, 4 von der Nichtarbeitsstellung in die Arbeitsstellung wird der Querschnitt des Drosselventils 47 über Steuereinrichtung 49 wieder so verändert, dass er kleiner ist als der Querschnitt des Leitungssystems 44.

### Bezugszeichenliste

- 1: Landwirtschaftliche Arbeitsmaschine
- 2: Trägerhauptgestell
- 3: Tragarm
- 4: Tragarm
- 5: Koppelglied
- 6: Koppelglied
- 7: Stellmittel
- 8: Stellmittel
- 9: Hubzylinder
- 10: Hubzylinder
- 11: Kolben
- 12: Kolben
- 13: Kolbenstange
- 14: Kolbenstange
- 15: Fortsatz
- 16: Fortsatz
- 17: Hubzylinderboden
- 18: Hubzylinderboden
- 19: topfförmige Vertiefung
- 20: topfförmige Vertiefung
- 21: Volumenstrombegrenzer
- 22: Drosseleinrichtung
- 23: Leckölleitung
- 24: Rücklauf
- 25: Leitungssystem
- 26: Druckkammer
- 27: Druckkammer
- 28: Sperrventil
- 29: Sperrventil
- 30: Leitungssystem
- 31: Ringoberfläche
- 32: Ringoberfläche
- 33: Elektronisch gesteuerte Vorrichtung
- 34: Elektronisch gesteuerte Vorrichtung
- 35: Hubzylinder
- 36: Hubzylinder
- 37: Stellmittel
- 38: Stellmittel
- 39: Kolben
- 40: Kolben
- 41: Kolbenstange
- 42: Kolbenstange
- 43: Leitungssystem
- 44: Leitungssystem
- 45: Volumenstromsteuerer
- 46: Volumenstromsteuerer
- 47: Drosselventil
- 48: Drosselventil
- 49: Steuereinheit
- 50: Lagesensor
- 51: Induktiver Sensor
- 52: Leitungssystem

## Patentansprüche

1. Verfahren zum Schwenken der Tragarme einer landwirtschaftlichen Arbeitsmaschine mit wenigstens zwei an einem Trägerhauptgestell angeordneten, in wenigstens eine Arbeitsstellung und wenigstens eine Nichtarbeitsstellung schwenkbaren Tragarmen,
**dadurch gekennzeichnet,**
**dass** die Tragarme (3, 4) auf ein Eingangssignal hin selbsttätig mit einem zeitlichen Abstand von wenigstens einer Arbeitsstellung in wenigstens eine Nichtarbeitsstellung und umgekehrt bewegt werden können.

2. Verfahren nach Anspruch 1,
**dadurch gekennzeichnet,**
**dass** die Tragarme (3, 4) in einer definierten zeitlichen Reihenfolge zusammenklappen und in umgekehrter Reihenfolge wieder auseinanderklappen.

3. Verfahren nach einem oder mehreren der vorhergehenden Ansprüche,
**dadurch gekennzeichnet,**
**dass** wenigstens ein Tragarm (3, 4) beim Zusammenklappen zumindest auf einem Teil des Schwenkweges gebremst einschwenkt.

4. Verfahren nach einem oder mehreren der vorhergehenden Ansprüche,
**dadurch gekennzeichnet,**
**dass** mindestens ein Tragarm (3, 4) beim Auseinanderklappen zumindest auf einem Teil des Schwenkweges gebremst ausklappt.

5. Verfahren nach einem oder mehreren der vorhergehenden Ansprüche,
**dadurch gekennzeichnet,**
**dass** die Tragarme (3, 4) in verschiedenen Arbeits- und Nichtarbeitsstellungen festlegbar sind.

6. Vorrichtung zur Durchführung des Verfahrens nach Anspruch 1,
**dadurch gekennzeichnet,**
**dass** jedem Tragarm (3, 4) wenigstens ein Stellmittel (7, 8) mit zumindest einem eigenen Leitungssystem (25, 30) mit wenigstens einem Sperrventil (28, 29) zugeordnet ist und mindestens einem der Stellmittel (7, 8) ein Volumenstrombegrenzer (21) zugeordnet ist, wobei das Sperrventil (28) des einen Stellmittels (7) gegenläufig zu dem Sperrventil (29) des anderen Stellmittels (8) angeordnet ist.

7. Vorrichtung zur Durchführung eines Verfahrens nach Anspruch 6,
**dadurch gekennzeichnet,**
**dass** die Stellmittel (7, 8) als Hubzylinder (9, 10) mit an den Kolben (11, 12) angearbeiteten Fortsätzen (15, 16) und topfförmigen Vertiefungen (19, 20) in den Hubzylinderböden (17, 18) ausgeführt sind, wobei die Fortsätze (15, 16) und die topfförmigen Vertiefungen (19, 20) zusammenarbeiten.

8. Vorrichtung zur Durchführung eines Verfahrens nach Anspruch 6,
**dadurch gekennzeichnet,**
**dass** die Stellmittel (7, 8) als Hubzylinder (9, 10) mit an den Hubzylinderböden (17, 18) angearbeiteten Fortsätzen (15, 16) und topfförmigen Vertiefungen (19, 20) in den Kolben (11, 12) ausgeführt sind, wobei die Fortsätze (15, 16) und die topfförmigen Vertiefungen (19, 20) zusammenarbeiten.

9. Vorrichtung zur Durchrührung eines Verfahren nach einem oder mehreren der Ansprüche 6 bis 7,
**dadurch gekennzeichnet,**
**dass** der Volumenstrombegrenzer (21) aus mindestens einem Fortsatz (15) des Kolbens (11), wenigstens einer topfförmigen Vertiefung (19) am Hubzylinderboden (17) und mindestens einem Rücklauf (24) für ein energieübertragendes Medium besteht.

10. Vorrichtung zur Durchführung eines Verfahren nach einem oder mehreren der Ansprüche 6 und 8,
**dadurch gekennzeichnet,**
**dass** der Volumenstrombegrenzer (21) aus mindestens einem Fortsatz (15) des Hubzylinderbodens (17), wenigstens einer topfförmigen Vertiefung (19) im Kolben (11) und mindestens einem Rücklauf (24) für ein energieübertragendes Medium besteht.

11. Vorrichtung zur Durchführung des Verfahrens nach einem oder mehreren der Ansprüche 9 und 10,
**dadurch gekennzeichnet,**
**dass** der Rücklauf (24) für das energieübertragende Medium eine Leckölleitung (23) ist.

12. Vorrichtung zur Durchführung des Verfahrens nach einem oder mehreren der Ansprüche 9 und 10,,
**dadurch gekennzeichnet,**
**dass** der Rücklauf (24) für das energieübertragende Medium eine Drosseleinrichtung (22) ist.

13. Vorrichtung zur Durchführung des Verfahrens nach Anspruch 12,
**dadurch gekennzeichnet,**
**dass** die Drosseleinrichtung (22) ein an sich bekanntes einstellbares Drosselventil ist.

14. Vorrichtung zur Durchführung des Verfahrens nach einem oder mehreren der vorhergehenden Ansprüche,
**dadurch gekennzeichnet,**
**dass** die Drosseleinrichtung (22) und/oder das Sperrventil (28) in den Hubzylinderboden (17) integriert ist/sind.

15. Vorrichtung zur Durchführung des Verfahrens nach einem oder mehreren der vorhergehenden Ansprüche,
**dadurch gekennzeichnet,**
**dass** das Sperrventil (29) in den Hubzylinderboden (18) integriert ist.

16. Vorrichtung zur Durchführung des Verfahrens nach Anspruch 1,
**dadurch gekennzeichnet,**
**dass** jedem Tragarm (3, 4) wenigstens ein Stellmittel (37, 38) zugeordnet ist und die Stellmittel über ein Leitungssystem (43) miteinander gekoppelt sind, wobei jedem Stellmittel (37, 38) wenigstens ein weiteres zumindest einen Volumenstromsteuerer (45, 46) aufnehmendes Leitungssystem (44) zugeordnet ist.

17. Vorrichtung zur Durchführung des Verfahrens nach Anspruch 1,
**dadurch gekennzeichnet,**
**dass** jedem Tragarm (3, 4) wenigstens ein Stellmittel (37, 38) zugeordnet ist und die Stellmittel über ein Leitungssystem (43) miteinander gekoppelt sind, wobei jedem Stellmittel (37, 38) wenigstens ein weiteres Leitungssystem (44, 52) zugeordnet ist und die weiteren Leitungssysteme (44, 52) unterschiedlichen Querschnitt aufweisen, wobei dem Leitungssystem (44, 52) mit dem größeren Querschnitt wenigstens ein Volumenstromsteuerer (45) zugeordnet ist.

18. Vorrichtung zur Durchführung des Verfahrens nach Anspruch 16 oder 17,
**dadurch gekennzeichnet,**
**dass** der Volumenstromsteuerer (45, 46) als einstellbares Drosselventil (47, 48) ausgeführt ist.

19. Vorrichtung zur Durchführung des Verfahrens nach einem oder mehreren der Ansprüche 16 bis 18,
**dadurch gekennzeichnet,**
**dass** die Volumenstromsteuerer (45, 46) der Stellmittel (37, 38) über ein Steuergerät (49) selbsttätig angesteuert werden.

20. Vorrichtung zur Durchführung des Verfahrens nach Anspruch 19,
**dadurch gekennzeichnet,**
**dass** das Steuergerät (49) in Abhängigkeit von den durch einen Lagesensor (50) generierten Signalen Stellsignale auf die Volumenstromsteuerer (45, 46) überträgt, wobei die Generierung der Signale des Lagesensors (50) in Abhängigkeit von der momentanen Stellung wenigstens eines der Tragarme (3, 4) erfolgt.

21. Vorrichtung zur Durchführung des Verfahrens nach Anspruch 20,
**dadurch gekennzeichnet,**
**dass** der Lagesensor (50) als induktiver Sensor (51) ausgebildet ist.
